**Europäisches Patentamt**

**European Patent Office**

**Office européen des brevets**

(11) Veröffentlichungsnummer: **0 113 885**
**A2**

# (12) EUROPÄISCHE PATENTANMELDUNG

(21) Anmeldenummer: **83112588.5**

(22) Anmeldetag: **14.12.83**

(51) Int. Cl.³: **G 06 F 3/04**

(30) Priorität: **17.12.82 DE 3246867**

(43) Veröffentlichungstag der Anmeldung: **25.07.84**
**Patentblatt 84/30**

(84) Benannte Vertragsstaaten: **CH DE FR GB IT LI SE**

(71) Anmelder: **SIEMENS AKTIENGESELLSCHAFT, Berlin und München Wittelsbacherplatz 2, D-8000 München 2 (DE)**

(72) Erfinder: **Gustafsson, Jan, Birkenhainstrasse 3, D-8000 München 71 (DE)**
Erfinder: **Rotscheidt, Wolfgang, Dipl.-Ing., Buchhofstrasse 25, D-8136 Percha (DE)**

(54) **Schaltungsanordnung für eine Sende-Empfangsstelle für Daten.**

(57) Die Erfindung betrifft eine Schaltungsanordnung für eine Sende-Empfangsstelle von Daten, welche durch einen Steuerbaustein für direkten Speicherzugriff (ST) vermittelt werden, wobei die Daten zwischen einem Speicher (SP) und einem Prozessor (PP) einer peripheren Einheit transferiert werden. Die Sende-Empfangsstelle wird durch einen Eingabe-Ausgabebaustein (EA) gebildet. Eine Verknüpfungsschaltung verknüpft das vom Eingabe-Ausgabebaustein (EA) gegebene Signal (BF) und das vom Steuerbaustein für den direkten Speicherzugriff (ST) abgegebene Signal (DACK) in der Weise zu einem vom Steuerbaustein für den direkten Speicherzugriff (ST) empfangenen Steuersignal (DRQ) in der Weise, daß jeweils nur ein Datum zwischen dem Speicher (SP) und dem Eingabe-Ausgabebaustein (EA) übertragen wird.

0113885

SIEMENS AKTIENGESELLSCHAFT     1     Unser Zeichen
Berlin und München                   VPA  82 P 2078 E

Schaltungsanordnung für eine Sende-Empfangsstelle für Daten

Die Erfindung betrifft eine Schaltungsanordnung gemäß dem Oberbegriff des Patentanspruchs 1.

Ein Prozessorsystem besteht im allgemeinen aus einem Prozessor, einem oder mehreren Speichern und peripheren Bausteinen, die über Adress- und Datensammelleitungen, den sog. System-Bus verbunden sind. Periphere oder auch externe Baueinheiten sind beispielsweise Drucker, Sichtgeräte, Floppy Disk oder ähnliches. Letztere sind sog. intelligente Baueinheiten, d.h. sie besitzen einen eigenen Prozessor, der zur Steuerung der externen Baueinheit dient.

Beim Betrieb des Prozessorsystems werden Daten vom Speicher an die externen Baueinheiten gegeben und umgekehrt. Bei der Struktur des Prozessorsystems, d.h. des Prozessors, ist diese Datenübermittlung nicht direkt möglich, sondern sie läuft über den Prozessor. Um diesen von dieser Aufgabe zu entlasten, wurde ein spezieller Baustein konstruiert, der Baustein für den direkten Speicherzugriff, der sog. DMA-Baustein. Dieser DMA-Baustein hat die Aufgabe, die Datenübermittlung zwischen dem Speicher und den externen Baueinheiten zu steuern, und während des Datenaustausches den Prozessor anzuhalten. Der Aufbau des DMA-Bausteines und die Arbeitsweise sind in dem Buch "Einführung in die Mikrocomputertechnik" von Adam Osborne, 3. Auflage auf den Seiten 5.25 bis 5.38 beschrieben.

Kro 1 Obh / 15. Dez. 1982

Die intelligenten, externen Baueinheiten, und nur solche, liegen der weiteren Beschreibung zugrunde, besitzen neben dem Prozessor auch einen Speicherbaustein. In oder aus diesem Speicherbaustein werden die Daten geschrieben oder gelesen, die vom DMA-Baustein vermittelt werden. Es ist bekannt, diesen Speicherbaustein mit Hilfe von Zählerbausteinen zu adressieren. Dazu werden das Schreib-Lesesignal und das Quittungssignal des DMA-Bausteines über ein ODER-Verknüpfungsglied auf die Takteingänge der Zählerbausteine gegeben. Die Ausgänge der Zählerbausteine liegen am Adresseingang des Speicherbausteines an. Nach jedem Schreib- bzw. Lesesignal wird der Zählerstand so verändert, daß der nächste Speicherplatz adressiert wird. Der Prozessor der externen Baueinheit schreibt in bzw. liest aus dem Speicherbaustein Daten.

Die bekannte Schaltungsanordnung hat den Nachteil, daß die verwendeten Speicherbausteine teuer sind, und daß der Schaltungsaufwand groß ist.

Es ist Aufgabe der Erfindung, eine einfache Sende-Empfangsstelle für Daten, d.h. eine DMA-Schnittstelle anzugeben, bei der die Daten durch einen DMA-Baustein vermittelt werden.

Diese Aufgabe wird erfindungsgemäß durch die im kennzeichnenden Teil des Patentanspruchs 1 angegebenen Merkmale gelöst.

Die erfindungsgemäße Schaltungsanordnung hat den Vorteil, daß mit dem verwendeten Eingabe-Ausgabebaustein ein handelsüblicher, preiswerter Baustein verwendet werden kann.

Im folgenden wird die erfindungsgemäße DMA-Schnittstelle anhand eines in der Zeichnung dargestellten Ausführungsbeispieles beschrieben. Dabei zeigen

Fig. 1 ein Prozessorsystem und eine externe Baueinheit und

Fig. 2 eine DMA-Schnittstelle.

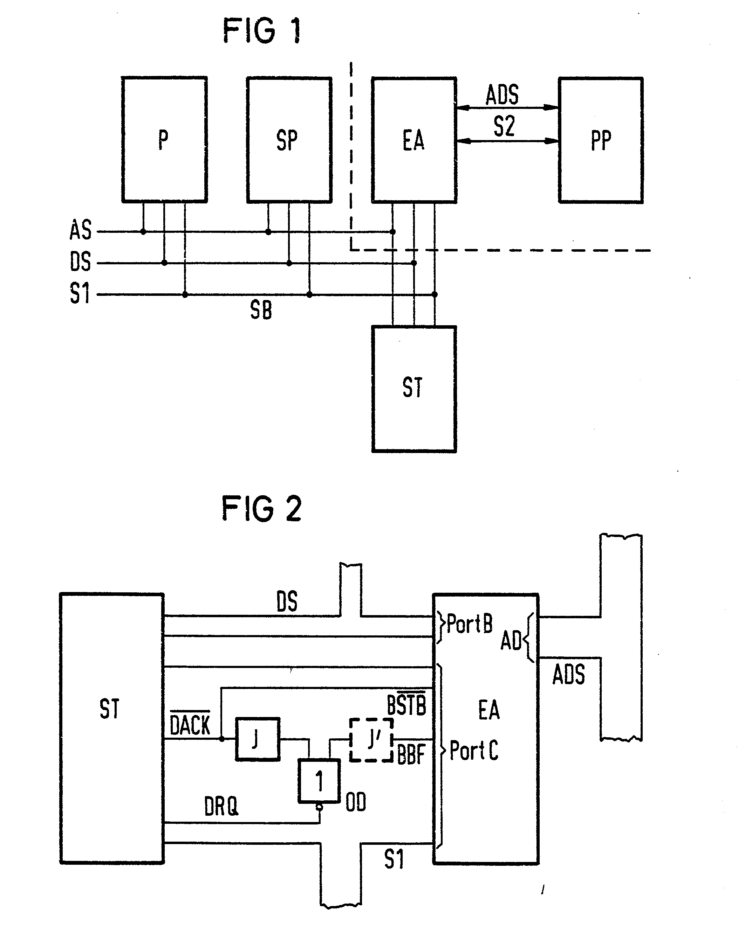

In den Figuren sind nur die zum Verständnis der Erfindung notwendigen Bausteine und Verbindungsleitungen dargestellt. Dies sind in Fig. 1 ein Prozessor P, ein Steuerbaustein für den direkten Speicherzugriff ST, und ein Speicher SP, die Teile eines Prozessorsystems sind. Diese Bausteine und ein Eingabe-Ausgabebaustein EA sind über Adress-Sammelleitungen AS, Datensammelleitungen DS und Steuerleitungen S1, dem sog. System-Bus SB verbunden. Der Eingabe-Ausgabebaustein EA und ein Prozessor PP sind als Teil einer externen Peripherieeinheit dargestellt. Dieser Prozessor PP der Peripherieeinheit ist über Adress- und Datensammelleitungen ADS und weiteren Steuerleitungen S2 mit dem Eingabe-Ausgabebaustein EA verbunden. Die beiden Prozessoren P und PP und der Speicher SP sind handelsübliche Bausteine, beispielsweise der Firma Intel. Die grundsätzlichen Funktionsabläufe im parallelen Eingabe-Ausgabebaustein EA sind im Buch "Einführung in die Mikrocomputertechnik" von Adam Osborne, 3. Auflage auf den Seiten 5.6 bis 5.9 beschrieben.

In der folgenden Funktionsbeschreibung wird auch auf die in Fig. 2 dargestellte Schaltungsanordnung Bezug genommen. Hier sind der Steuerbaustein für den direkten Speicherzugriff ST und der Eingabe-Ausgabebaustein EA dargestellt, wobei diese beispielsweise durch folgende handelsübliche Bausteine der Firma Intel realisiert sind. Der Steuerbaustein für den direkten Speicherzugriff ST hat die Nummer 8257, der Eingabe-Ausgabebaustein EA trägt die Nummer 8155H. In den zugehörigen Datenblättern sind diese Bausteine, insbesondere die Anschlüsse mit anderen Bausteinen, genau beschrieben. Die darin üblichen Bezeichnungen werden im folgenden verwendet. Die Adress- und Datensammelleitungen ADS sind an den mit AD bezeichneten Anschlüssen, und die Datensammelleitungen DS an den mit Port B bezeichneten Anschlüssen angeschaltet. Die mit Port C bezeichneten Anschlüsse
sind auf Grund einer entsprechenden Programmierung des Eingabe-Ausgabebausteins EA Anschlüsse für einige der Steuerleitungen S1. Auf Grund einer entsprechenden Programmierung
des Eingabe-Ausgabebausteins EA sind beispielsweise die mit
Port B bezeichneten Anschlüsse Eingänge oder Ausgänge für
den Datentransfer.

Der Datentransfer vom Speicher SP zum Prozessor PP der peripheren Einheit läuft folgendermaßen ab. Der Ausgangszustand sei hierbei folgender: im Speicher des Eingabe-Ausgabebausteins EA (seine mit Port B bezeichneten Anschlüsse
sind jetzt Eingänge) ist ein Datum gespeichert. Dann liegt
auf der mit BBF bezeichneten Steuerleitung (Anschluß 2 des
Eingabe-Ausgabebausteins EA), die an einem Eingang eines invertierenden ODER-Verknüpfungsgliedes OD angeschaltet ist,
das einer logischen "1" entsprechende Potential. Auf der
mit $\overline{DACK}$ bezeichneten Steuerleitung (beispielsweise Anschluß 25 des Steuerbausteins für den direkten Speicherzugriff ST), die über einen Inverter I mit dem anderen Eingang des invertierenden ODER-Verknüpfungsgliedes OD verbunden ist, liegt das einer logischen "1" entsprechende Potential, da momentan keine Datenübertragung stattfindet. Diese Steuerleitung ist weiter mit der mit B $\overline{STB}$ bezeichneten
Steuerleitung (Anschluß 5 des Eignabe-Ausgabebausteins EA)
verbunden. Auf der mit DRQ bezeichneten Steuerleitung (beispielsweise Anschluß 19 des Steuerbausteins für den direkten Speicherzugriff ST, die am Ausgang des invertierenden
ODER-Verknüpfungsgliedes OD angeschaltet ist, liegt dann
ein der logischen "0" entsprechendes Potential.

Wenn vom Prozessor PP der Peripherieeinheit in üblicher Weise das Datum aus dem Speicher des Eingabe-Ausgabebausteines EA über die Adress- und Datensammelleitungen ADS ausgelesen wird, liegt auf der mit BBF bezeichneten Steuerleitung ein der logischen "0" entsprechendes Potential. Dann liegt auf der mit DRQ bezeichneten Steuerleitung ein der logischen "1" entsprechenden Potential, d.h. dem Steuerbaustein für den direkten Speicherzugriff ST, wird eine Anforderung für eine Datenübertragung gemeldet. In üblicher Weise wird das Datum vom Speicher SP zum Eingabe-Ausgabebaustein EA über die Datensammelleitung DS übertragen. Das die Übertragung meldende Signal liegt auf der mit $\overline{DACK}$ (und damit auch auf der mit B $\overline{STB}$) bezeichneten Steuerleitung, die jetzt ein der logischen "0" entsprechendes Potential trägt. Die Schaltung des invertierenden ODER-Verknüpfungsgliedes OD und des Inverters I bewirkt, daß sich der Steuerbaustein für den direkten Speicherzugriff ST kurzfristig selber sperrt, d.h. daß die mit DRQ bezeichneten Steuerleitungen ein der logischen "0" entsprechende Potential trägt. Der relativ langsame Eingabe-Ausgabebaustein EA bewirkt mit seinem Signal, daß der Speicher voll ist, welches auf der mit B BF bezeichneten Steuerleitung liegt, daß weiter auf der mit DRQ bezeichneten Steuerleitung ein der logischen "0" entsprechendes Potential liegt. Auf Grund eines auf der mit B $\overline{STB}$ bezeichneten Steuerleitung liegenden, einer logischen "0" entsprechenden Potentials, wird das Datum in den Eignabe-Ausgabebaustein/EA übernommen.. Nach dem Auslesen des Datums durch den Prozessor PP der Peripherieeinheit, wiederholt sich dieser Zyklus.

Sollen Daten vom Eingabe-Ausgabebaustein EA zum Speicher SP gesendet werden, so sind beispielsweise die mit Port B bezeichneten Anschlüsse des Eingabe-Ausgabebausteins EA auf Grund einer entsprechenden Programmierung Ausgänge für Daten.

Der Datentransfer vom Prozessor PP der peripheren Einheit zum Speicher SP läuft analog zum Datentransfer in umgekehrter Richtung ab. Vom Prozessor PP der Peripherieeinheit wird in üblicher Weise ein Datum in die Eingabe-Ausgabeeinheit EA geschrieben. Die auf den Steuerleitungen $\overline{\text{DACK}}$, B BF, B $\overline{\text{STB}}$ und DRQ liegenden Potentiale und der Funktionsablauf sind analog in dem zuvor beschriebenen. Es ist nun ein weiterer Inverter I' (gestrichelt gezeichnet in der Fig. 2) dem Eingang des invertierenden ODER-Verknüpfungsgliedes vorgeschaltet, an dem die mit B BF bezeichnete Steuerleitung angeschaltet ist.

Der Datentransfer in beiden Richtungen zwischen dem Speicher SP und der Peripherieeinheit, bzw. dem zugehörigen Eingabe-Ausgabebaustein, wird durch das sich ändernde Potential auf der mit B BF bezeichneten Steuerleitung eingeleitet.

In analoger Weise können natürlich statt der mit Port B bezeichneten Anschlüsse auch die mit Port A bezeichneten verwendet werden.

Wie schon erwähnt, ist der Eingabe-Ausgabebaustein EA zu langsam, um den Steuerbaustein für den direkten Speicherzugriff ST nach dem Transfer eines Datums anzuhalten. Die Schaltung aus dem invertierenden ODER-Verknüpfungsglied OD und dem Inverter I bzw. und dem weiteren Inverter I' verknüpft die Signale $\overline{\text{DACK}}$ des Steuerbausteins für den direkten Speicherzugriff ST und B BF des Eingabe-Ausgabebausteins EA zu einem Signal DRQ für den Steuerbaustein für den direkten Speicherzugriff in der Weise, daß jeweils nur ein Datum zum Eingabe-Ausgabebaustein EA übertragen oder von diesem gesendet wird. Hierdurch kann ein relativ langsamer Eingabe-Ausgabebaustein EA zur Realisierung einer schnellen DMA-Schnittstelle verwendet werden.

Es ist natürlich eine Schaltungsanordnung möglich, in der beide Ausführungsformen verwendet werden. Dies ist z.B. mit zwei Kanälen des Steuerbausteins für den direkten Speicherangriff ST möglich. Der Eingabe-Ausgabebaustein     EA besitzt zwei Ein-Ausgänge (Port A und Port B), die hierzu
verwendet werden können.

Es sind aber auch Schaltungsanordnungen mit nur einem Kanal eines Steuerbausteins für den direkten Speicherzugriff
ST möglich. Dazu wäre für die Prozessoren P und PP  nur
ein höherer Aufwand in der Programmierung zur Richtungsumschaltung nötig.

3 Patentansprüche

2 Figuren

0113885

VPA 82 P 2078 E 1

Bezeichnungen

P Prozessor

PP Prozessor der Peripherieeinheit

SP Speicherbaustein

EA Eingabe-Ausgabebaustein

ST Steuerbaustein für den direkten Speicherzugriff

AS Adressammelleitungen

DS Datensammelleitungen

S1 Steuerleitungen

S2 weitere Steuerleitungen

ADS Adress- und Datensammelleitungen

SB System-Bus

OD invertierendes ODER-Verknüpfungsglied

I Inverter

I' weiterer Inverter

Patentansprüche

1. Schaltungsanordnung für eine Sende-Empfangsstelle für Daten, welche durch einen Steuerbaustein für den direkten Speicherzugriff (ST) vermittelt werden, mit einem Speicher (SP) aus dem die Daten gelesen oder in den sie geschrieben werden,

gekennzeichnet durch einen Eingabe-Ausgabebaustein (EA) und durch eine Verknüpfungsschaltung, die die vom Eingabe-Ausgabebaustein (EA) abgegebenen Signale (BF) und vom Steuerbaustein für den direkten Speicherzugriff (ST) abgegebenen Signale (DACK)zu einem, vom Steuerbaustein für den direkten Speicherzugriff (ST) empfangenen Signal (DRQ) in der Weise verknüpft, daß jeweils ein Datum zum Eingabe-Ausgabebaustein (EA) übertragen, bzw. von diesem gesendet wird.

2. Schaltungsanordnung nach Anspruch 1, dadurch gekennzeichnet, daß die Verknüpfungsschaltung für die Datentransferrichtung vom Speicher (SP) zum Eingabe-Ausgabebaustein (EA) aus einem invertierenden ODER-Verknüpfungsglied (OD) und einem Inverter (I) besteht, wobei das Signal (BF) an einem Eingang des invertierenden ODER-Verknüpfungsgliedes (OD) anliegt, das Signal (DACK) über einen Inverter am anderen Eingang des invertierenden ODER-Verknüpfungsgliedes (OD) anliegt, und am Ausgang desselben das Signal (DRQ) anliegt.

3. Schaltungsanordnung nach Anspruch 1, dadurch gekennzeichnet, daß die Verknüpfungsschaltung für die Datentransferrichtung vom Eingabe-Ausgabebaustein (EA) zum Speicher (SP) aus einem invertierenden ODER-Verknüpfungsglied (OD), einem Inverter (I) und einem weiteren Inverter (I') besteht, wobei das Signal (BF) über den Inverter (I') an einem Eingang des invertierenden ODER-Verknüpfungsgliedes (OD) anliegt,
das Signal ($\overline{\text{DACK}}$) über den Inverter (I) am anderen Eingang
des invertierenden ODER-Verknüpfungsgliedes (OD) anliegt
und am Ausgang desselben das Signal (DRQ) anliegt.

0113885

1/1

FIG 1

FIG 2